Europäisches Patentamt

European Patent Office

Office européen des brevets

(11) Publication number : **0 564 246 A1**

(12) **EUROPEAN PATENT APPLICATION**

(21) Application number : 93302487.9

(22) Date of filing : 30.03.93

(51) Int. Cl.⁵ : **A41D 13/00, B32B 27/12, A63B 71/08**

(30) Priority : 30.03.92 US 860005

(43) Date of publication of application : 06.10.93 Bulletin 93/40

(84) Designated Contracting States : **DE ES FR GB IT**

(71) Applicant : **Parker, A. Bruce 4324 Barringer Drive, Suite 111 Charlotte, North Carolina 28217 (US)**

(72) Inventor : **Parker, A. Bruce 4324 Barringer Drive, Suite 111 Charlotte, North Carolina 28217 (US)**

(74) Representative : **Skinner, Michael Paul c/o Swindell & Pearson 48 Friar Gate Derby DE1 1GY (GB)**

(54) **Custom body protective device.**

(57) A multi-layer protective pad (40), for being custom-fitted to a body member to be protected, includes a flexible inner cushion layer (41) for being placed closest to the body member. An initially flexible intermediate layer (42) is bonded to the inner layer. The intermediate layer includes at least one thickness (42a) of a fabric impregnated with a moisture-curable resin which hardens upon curing to form a rigid structure of the fabric which retains a body part-defined shape into which it is molded during curing. The intermediate layer (42) also holds the flexible inner cushion layer (41) in the same body-part defined shape. A flexible outer layer (43) is bonded to the intermediate layer (42) for being held by the intermediate layer in the same body-part defined shape as the intermediate shape.

FIG. 4

This invention relates to a custom-fitted body protective device such as a shin, thigh, or arm pad used to protect against injuries to sports participants, and to protect previous injuries which sports competition continues. The particular embodiment shown in the application is of a shin protector of the type to be used by soccer players during competition. The invention has application in any field--including non-sports related activities--which require or make desireable an accurate custom fit between the protective device and the body member. The invention takes advantage of polymer chemistry to permit quick and easy molding of a pad to the body part to be protected. Shock attenuation is increased since the custom fit provides greater contact between the protective device and the body member.

Prior art body protectors include numerous types of guards which are fitted over the body part, such as the shin. These devices typically include a soft component to place near the skin and a hard, shell-like outer cover. The soft component is intended not only to provide a cushion, but also to accommodate itself to the varying configurations of differing sized and shaped body parts. For this reason, the cushioned part is substantially greater in thickness than required merely to provide the required amount of shock attenuation. Such devices are sufficiently "generic" that they are required to be held in place by straps or bands.

Other prior art devices include pads which are constructed of thermo-setting materials, which are heated and then formed to the body while heated. These products require a source of heat, and are susceptible to either over-or-underheating. In addition, body heat itself can soften or at least increase the flexibility of the pad, thereby decreasing the effectiveness of the protection offered by the pad. Some prior art pads include air bladders which provide an air cushion against injurious blows. Other prior art devices have a plurality of connected-together segments which are hinged for limited movement relative to each other, on the theory that such movement permits the pad to more closely conform to the body part. All of these prior art devices achieve only an approximation of a truly proper and anatomically correct fit.

The present invention permits quick and easy application of a protective pad to a body part in such a way as to achieve a true custom fit. The moisture curable resin system used results in a very rigid pad, which holds the shape of the molded pad to a very high degree. No heat is required, and only a source of water is necessary. Atmospheric moisture alone will cure the pad into its hardened position in a relatively short period of time.

It is an object of the invention to provide an improved body protection device.

The present invention provides a multi-layer protective pad for being custom-fitted to a body member to be protected and including a flexible inner cushion layer for being placed closest to the body member. An initially flexible intermediate layer is bonded to the inner layer. The intermediate layer includes at least one thickness of a fabric impregnated with a moisture-curable resin which hardens upon curing to form a rigid structure of the fabric which retains a body part-defined shape into which it is molded during curing. The intermediate layer also holds the flexible inner cushion layer in the same body-part defined shape. A flexible outer layer is bonded to the intermediate layer for being held by the intermediate layer in the same body-part defined shape as the intermediate shape.

According to one preferred embodiment of the invention, at least one thickness of fabric comprises a plurality of overlaid thicknesses of fiberglass.

According to another preferred embodiment of the invention, the plurality of thicknesses of fiberglass comprises at least five thicknesses and no more than seven thicknesses.

According to yet another preferred embodiment of the invention, the fiberglass thicknesses are sewn together with stitches in order to provide stability to the protective pad during molding.

Preferably, the stitches extend substantially down the centerline of the intermediate layer.

According to one preferred embodiment of the invention, the inner layer comprises ethylene vinyl acetate.

According to another preferred embodiment of the invention, the inner layer has a waffle-like surface of regularly-spaced depressions separated by raised boundary areas.

According to yet another preferred embodiment of the invention, the outer layer comprises ethylene vinyl acetate.

According to yet another preferred embodiment of the invention, the outer layer has a waffle-like surface of regularly-spaced depressions separated by raised boundary areas.

According to another preferred embodiment of the invention, the outer layer comprises a thin sheet of film chosen from the group consisting of polyester and polycarbonate.

Preferably, the film is perforated to provide moisture flow through the pad to assist in proper curing of the resin during molding, and to promote air transfer through the pad during use of the pad.

According to one preferred embodiment of the invention, the moisture-curable resin comprises polyisocyanate.

In accordance with another embodiment, the multi-layer protective pad in combination with a protective storage pouch for preparing a protective pad custom-fitted to a body part to be protected, and including a flexible inner cushion layer for being placed closest to the body member. An initially flexible intermediate layer is bonded to the inner layer. The intermediate layer comprises at least one thickness of a fabric impregnated with a moisture-curable resin which hardens upon curing to form a rigid structure of the fabric which retains a body part-defined shape into which it is molded during curing, thereby also holding the flexible inner cushion layer in the same body-part defined shape.

A flexible outer layer is bonded to the intermediate layer for being held by the intermediate layer in the same body-part defined shape as the intermediate shape. A moisture-proof protective pouch is provided within which the elements of the pad are sealed in the absence of moisture until the time the pad is to be molded to the body part.

According to several preferred embodiments of the invention, the pad comprises a shin guard, a thigh pad, an elbow pad, a forearm pad, or an upper arm pad.

According to one preferred embodiment of the invention, the pad includes a second pad for being positioned and secured to the inner surface of the inner layer of the pad in surrounding relation to an injury for providing additional protection to the injury.

Embodiments of the present invention will now be described in more detail, by way of example only, and with reference to the accompanying drawings, in which:

Figure 1 is a perspective view of a prior art shin guard;

Figure 2 is a perspective view showing separation of a single pad from a length of pad material;

Figure 3 is a perspective view of a protective pad according to one embodiment of the invention;

Figure 4 is a perspective view of a protective pad embodiment according to another embodiment of the invention;

Figure 5 is a plan view of a protective pad including a secondary ring-shaped pad for protecting an injury;

Figure 6 is a side elevation showing a depression being carved into the inner layer of the pad to be placed over an injury;

Figures 7-10 illustrate the steps involved in forming the pad onto the body part to be protected.

Figures 11 and 12 illustrate use of the pad next to the skin (Figure 11) and between an inside sock and a game sock.

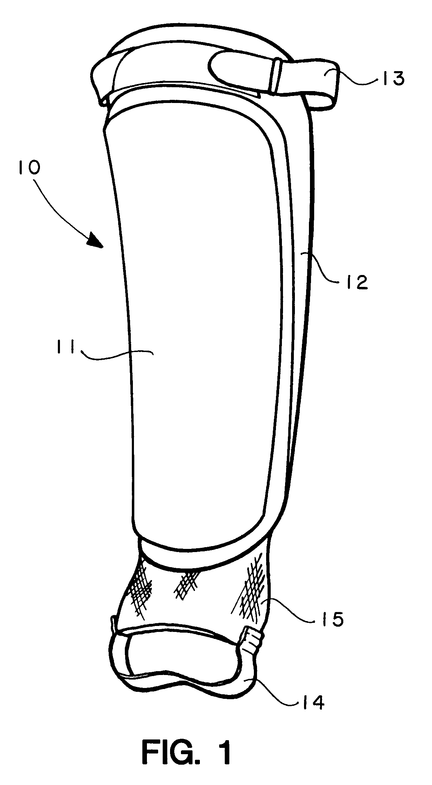

Referring now specifically to the drawings, a typical prior art shin guard is illustrated in Figure 1 and shown generally at reference numeral 10. As is characteristic of many types of prior art shin guards, the shin guard includes a hard, plastic outer shell 11 fastened to an inner pad 12. The shell 11 and pad 12 are molded into a generic curve along the longitudinal axis of the guard 10 considered suitable for being fitted over the shin of the wearer. Both the shell 11 and inner pad 12 are relatively thick in order to accommodate differences in fit. This thickness requires that the guard 10 be held onto the shin with an upper strap 13 and a lower strap 14, which fits under the foot and is hed in place by a piece of flexible webbing 15.

In a variation of the prior art construction illustrated above (not shown), the outer shell 11 is segmented into several long, strip-like members which are hinged together so that the degree of curvature of the guard is variable. This permits greater accommodation to different-sized shins.

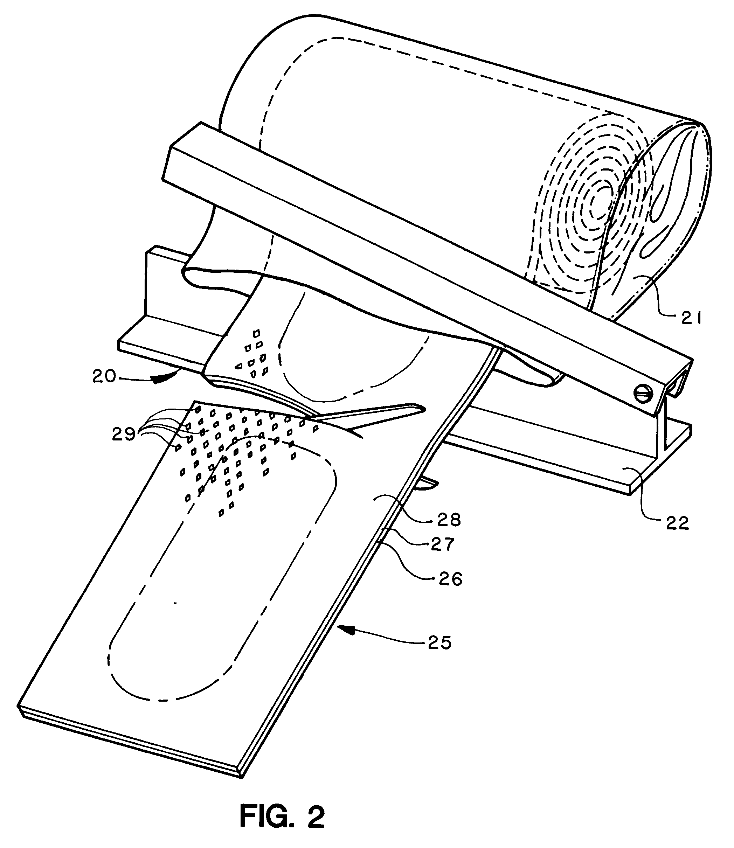

Referring now to Figure 2, one embodiment of the invention according to the present invention is illustrated. In this particular embodiment, an integral, long strip of multi-layer material in the form of an elongate pad member 20 is sealed after fabrication into a moisture-proof pouch 21. The pouch 21 can be sealed against moisture intrusion between uses by a clamp 22.

When needed, the clamp 22 is released and the elongate pad member is pulled through the pouch opening and cut to separate a single body protective pad 25 from the elongate pad member 20. pad 20 is formed of three basic layers, an inner layer 26, an intermediate layer 27 and an outer layer 28.

Inner layer 26 is preferably fabricated of a flexible, resilient and dense foamed plastic material such as ethylene vinyl acetate "EVA"). In the examples of this application, the inner layer 26 is molded in a "waffle" configuration whereby the surface of the inner layer has regularly-spaced depressions separated by raised boundary areas. A thickness of .2-.25 inches (.5 cm -.6 cm) is appropriate for use in a shin guard.

The intermediate layer 27 is comprised of several, for example, 5-7, layers of 4 inch (10 cm) wide woven fibergass which are overlaid on each other and stitched with sewing stitches down the middle to maintain structural integrity, particularly while molding takes place. These fiberglass layers are impregnated or coated with a moisture-curable resin such as polyisocyanate as described in full in the present applicant's U.S. Patent No. 4770299. This reactive system remains stable when maintained in substantially moisture-free conditions but hardens upon exposure to sufficient moisture to form a rigid, self-supporting structure. A typical formulation of the reaction system is set forth in the following table:

| Typical Formulation: | | | |
|---|---|---|---|
| Isonate↓ 143L | <u>or</u> | | |
| Mondur↓ CD | <u>or</u> | Polyisocyanate | 50.0% |
| Rubinate ↓ XI168 | | | |
| Pluracol↓ P1010 | | <u>polyol</u> | 46.6% |
| DC-200 Silicone | | <u>defoaming agent</u> | 0.30% |
| Benzoyl Chloride | | <u>stabilizer</u> | 0.10% |
| Thancat↓ DM-70 | | <u>catalyst</u> | 3.0% |
| | | | <u>100%</u> |

A complete discussion of the parameters of the reactive system, the manner of production and the variables which apply are found in U.S. Patent No. 4,411,262.

The polyisocyanate resin is characterized by in a viscous, liquid unhardened state so long as the resin is not exposed to moisture. This permits the fiberglass layers 27 and any flexible structure bonded to the layers to remain flexible and moldable so long as the resin is not exposed to moisture, and for a relatively short period of time after exposure to moisture. The curing time can be controlled to some extent by the quantity of water to which the resin is exposed. For example, exposure to water by dipping will result in quite rapid curing, while merely allowing the resin to be exposed to air will cause long curing times proportional to the amount of moisture, <u>i.e.</u>, the humidity, in the air to which it is exposed.

The outer layer 28 of the pad 25 illustrated in Figure 2 is formed of another layer of EVA padding adhered by a suitable waterproof adhesive to the inner EVA layer 31 around the periphery of the pad 25. Perforations 29 in the inner and outer EVA layers 26 and 28 provide light weight and breatheability to the pad 25.

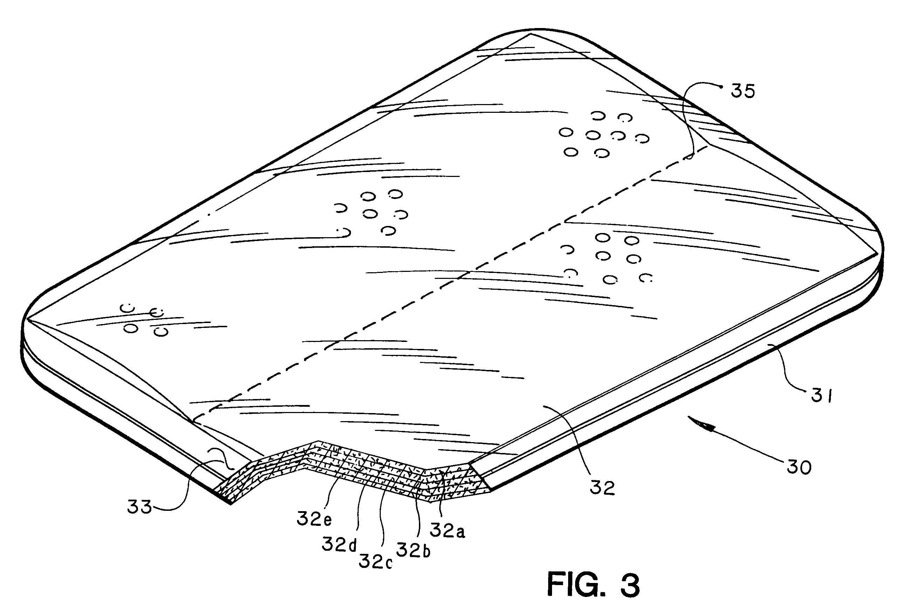

In another embodiment of the invention, a single pad 30 is fabricated and preformed into a flat member having the desired dimensions, as is shown in Figure 3, and then sealed in moisture-free conditions into a single moisture-proof pouch where it remains until just before it is to be applied to the body part to be protected for molding. By continued reference to Figure 3, pad 30 is formed of three basic layers, an inner layer 31, an intermediate layer 32 and an outer layer 33.

Inner layer 31 is preferably fabricated of a flexible, resilient and dense foamed plastic material such as ethylene vinyl acetate ("EVA"). In the examples of this application, the inner layer 31 is molded in a "waffle" configuration whereby the surface of the inner layer has regularly-spaced depressions separated by raised boundary areas. A thickness of .2-.25 inches (.5 cm -.6 cm) is appropriate for use in a shin guard.

The intermediate layer 32 is itself comprised of several, for example, 5-7, layers of 4 inch (10 cm) wide woven fibergass 32a-e, which are overlaid on each other and stitched with sewing stitches 35 down the middle to maintain structural integrity, particularly while molding takes place. The layers are sized to maintain a border of the inner layer of EVA approximately .5 in.(1.27 cm) to .25 in. (.64 cm) around the periphery of the pad 30. These fiberglass layers are impregnated or coated with a moisture-curable resin such as polyisocyanate as described above.

The outer layer 33 of the pad 30 illustrated in Figure 3 is formed of a thin film (5 mils or .13 mm) of polyester or polycarbonate sheet adhered by a suitable waterproof adhesive to the inner EVA layer 31 around the periphery of the pad 30. The film 33 is relatively rigid though bendable. Perforations 36 may be provided in the film 33 to facilitate moisture transfer to the intermediate fiberglass layers 32a-32e during curing and to facilitate air flow through the pad 30 during use.

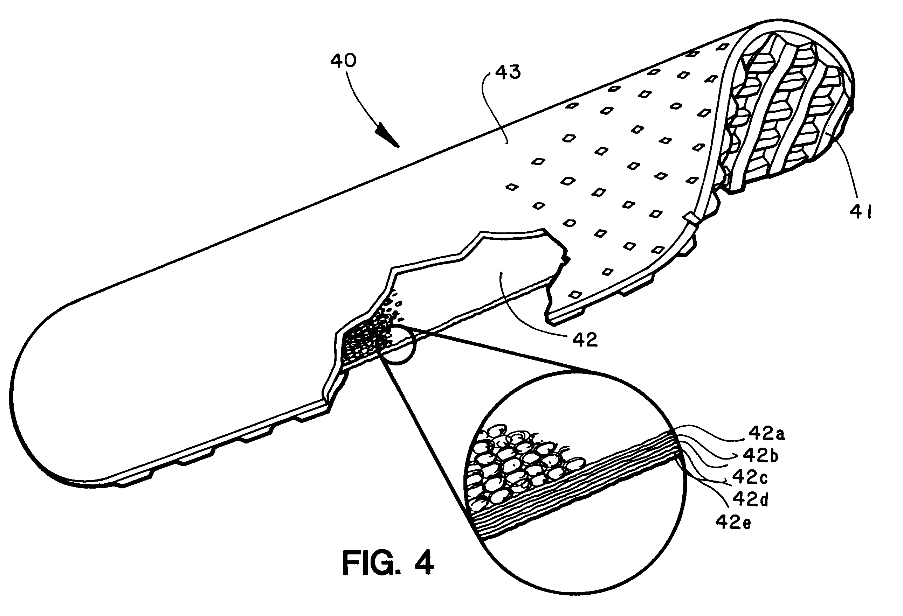

Another embodiment of the shin guard according to a preferred embodiment of the invention is shown in Figure 4 in its already-molded form and indicated broadly at reference number 40. Pad 40 has an inner layer 41 formed of "waffle" molded EVA as described above with reference to Pad 35.

Intermediate layer 42 is positioned between the inner layer 41 and an outer layer 43 formed of the same "waffle" molded EVA as the inner layer 41. As is shown in Figure 4, the surfaces of the inner and outer layers 41 and 43 are faced in the same direction so that the outer layer 43 presents the obverse face to the exterior in contrast to the inner layer 41. This results in a relatively smooth outer surface for pad 40, while maintaining the full effect of the "waffle" texture against the body.

Intermediate layer 42 is formed of several, for example, 5-7, layers of 4 inch (10 cm) wide woven fiberglass 42a-42e, which are overlaid on each other and then sealed between the inner layer 41 and the outer layer 42. The inner and outer layers 41, 42 are sealed around their respective overlaid borders to form a pad 40 which is bonded around the edges.

The fiberglass layers are impregnated or coated with a moisture-curable resin such as polyisocyanate, as described above.

Of course, other variations on the construction described above are possible, the basis of the invention being the provision of an intermediate moldable layer utilizing the moisture-curable resin described above, in combination with inner and outer layers suitable for the particular use intended.

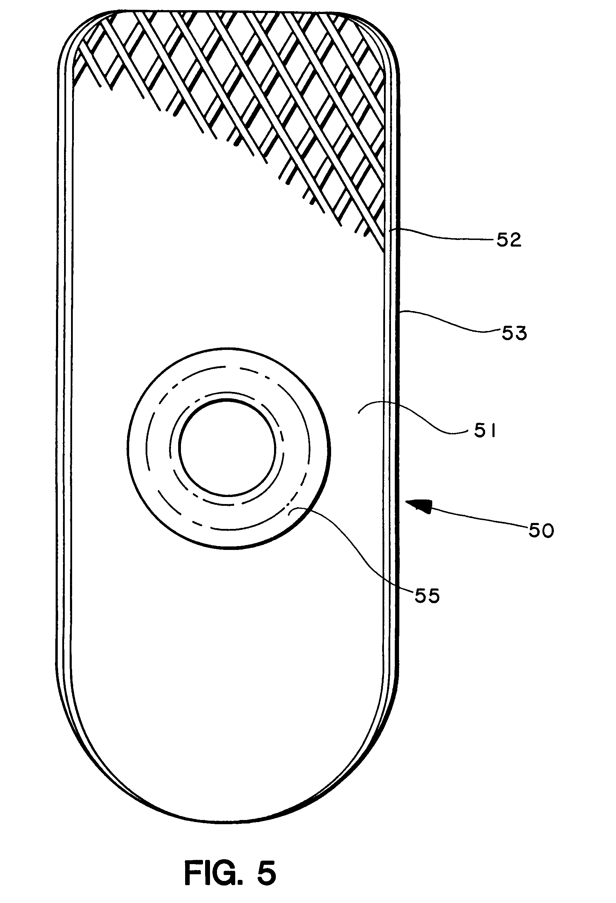

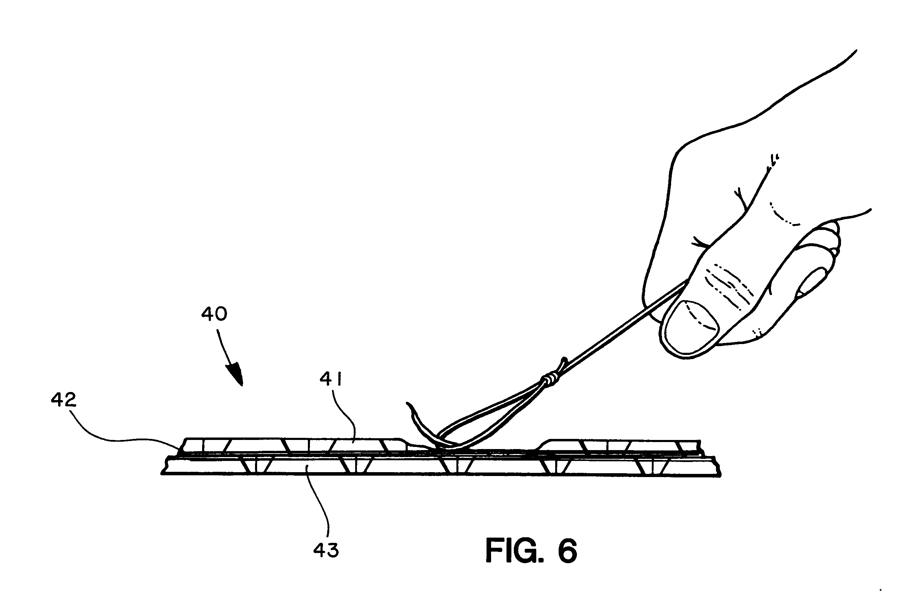

Two such further variations are illustrated in Figures 5 and 6. In Figure 6, a shin guard 50 is shown, which includes an inner layer 51 of waffle-molded EVA, an intermediate layer 52 of resin-impregnated or coated fiberglass layers, and an outer layer of. waffle-molded EVA 53. A second, smaller doughnut-shaped pad 55 is provided for being adhered to the surface of the inner layer 51. Pad 55 may include a pressure-sensitive adhesive covered with a release liner (not shown) which is removed upon use. If the wearer of the pad 50 already has an injury or wound, such as a bruise or cut, the pad 55 is placed on the shin in surrounding relation to the injury and the release liner is removed. The shin guard 50 in then placed on the shin in the normal fashion. The exposed adhesive on the outer side of the pad 55 adheres to the inner layer 51 and is retained in position around the injury or wound.

As is shown in Figure 6, the inner surface of the pad 50 may be cut away in the area of an injury or wound by, for example, using a wire loop with a sharp edge, or a heated wire. The cut-away area, when positioned over the injured area, protects the injury against further direct impact, even through the thickness of the pad 50. Instead, the force of any blows directed to the area of the injury of diverted to and dissipated in areas adjacent to the injury.

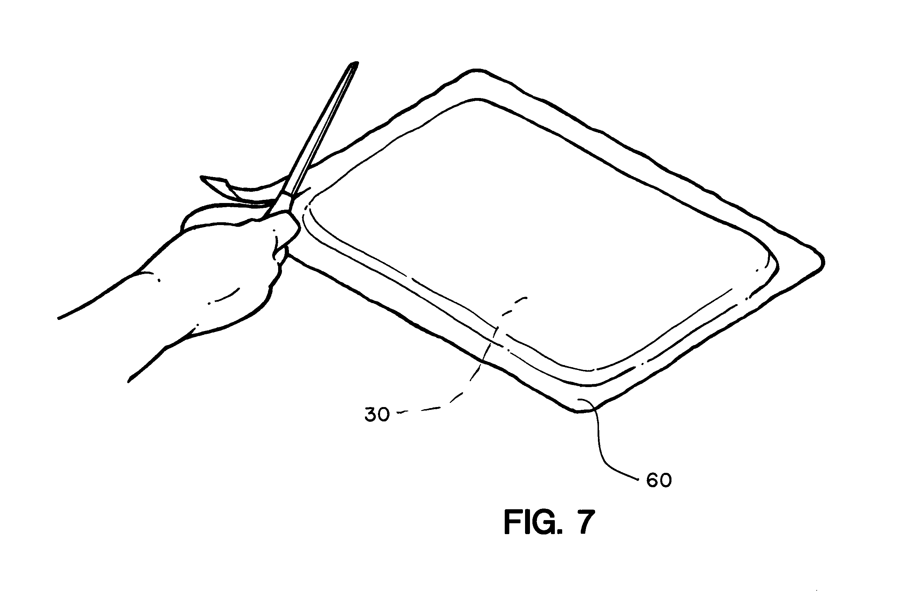

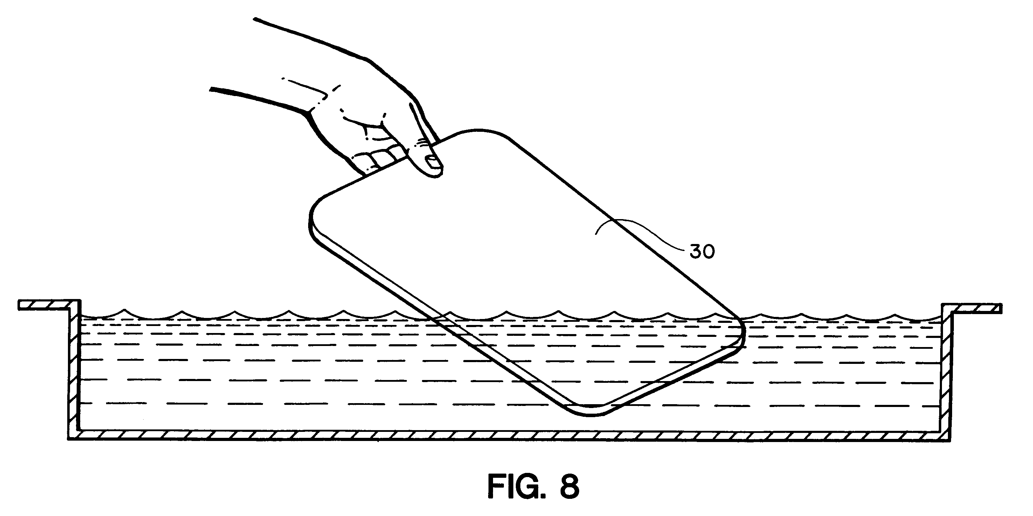

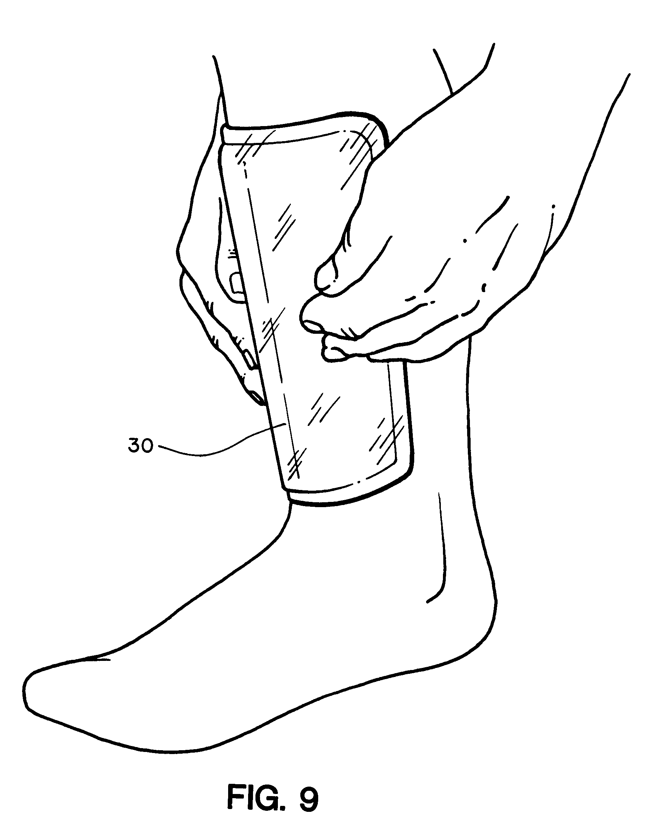

Preparation of the protective pads described above will now be explained with reference to Figures 7 through 10, with particular reference to the pad 30 illustrated in Figure 3. As is shown in Figure 7, a moisture-proof pouch 60 is cut open to permit access to the pad 30 contained in the pouch 60 in moisture-free conditions. As removed from the pouch 60, the pad 30 is soft and flexible, and can be easily conformed to !he body part to be protected. The pad 30 is then moistened, either by dipping in water as is shown in Figure 8, or by allowing exposure to moisture in the air. While wet but still flexible, pad 30 is immediately applied to the shin, as shown in Figure 9. Since curing of the resin in the intermediate layer 32 begins immediately, the wearer must be available when the pad 30 is removed from the pouch 60. However, enough curing time is available so that if adjustment of the shape or size of the pad 30 in needed, there is time to trim the pad 30 with a sharp knife or scissors before applying the pad to the shin.

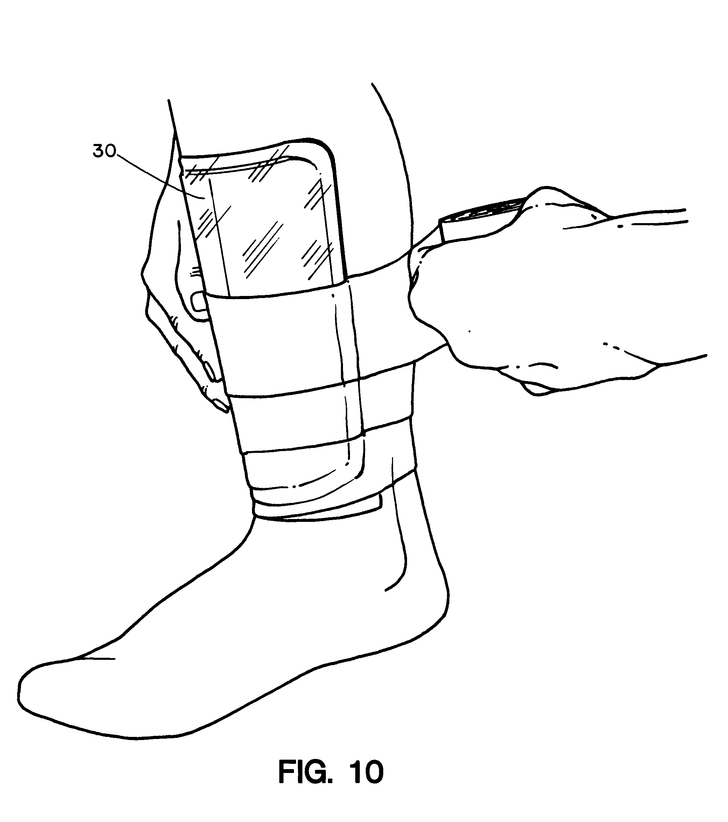

As is shown in Figure 10, the pad 30 is then held firmly in position on the shin by overwrapping the pad 30 while on the shin with an elastic bandage. Ordinarily, the resin will completely cure, and the pad 30 will be permanently molded into the exact shape desired in ten minutes or less. Resins of the type used to produce the molded pad 30 as describe above cure quickly and result in a very rigid and strong, but extremely lightweight structure. The rigidity and strength of the resulting structure provide excellent protection against injury, while protecting previous injuries or wounds from further impact-induced damage.

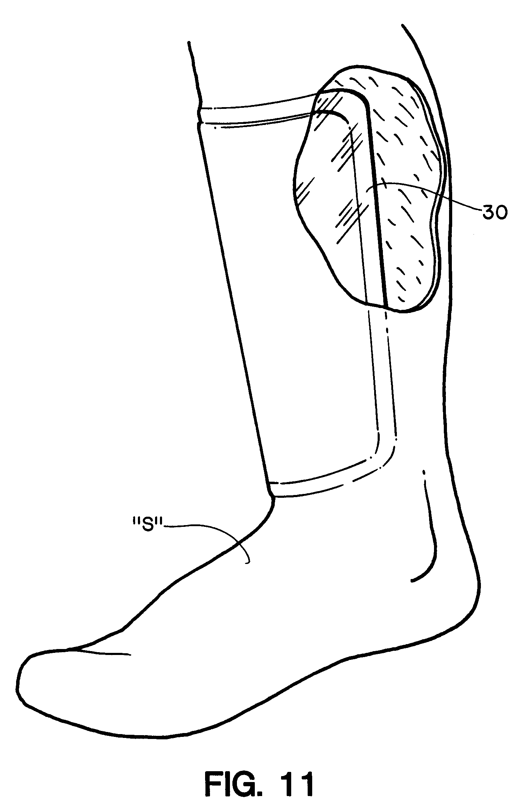

As is shown in Figure 11, the pad 30 can be worn directly next to the skin and under, for example, a soccer game sock "S". Since the pad 30 was molded directly next to the skin, the fit is virtually perfect, and fits so well that straps or belts are not ordinarily needed. The pad 30 is held in place merely by the sock and the adherence of the pad 30 to the corresponding shape of the shin.

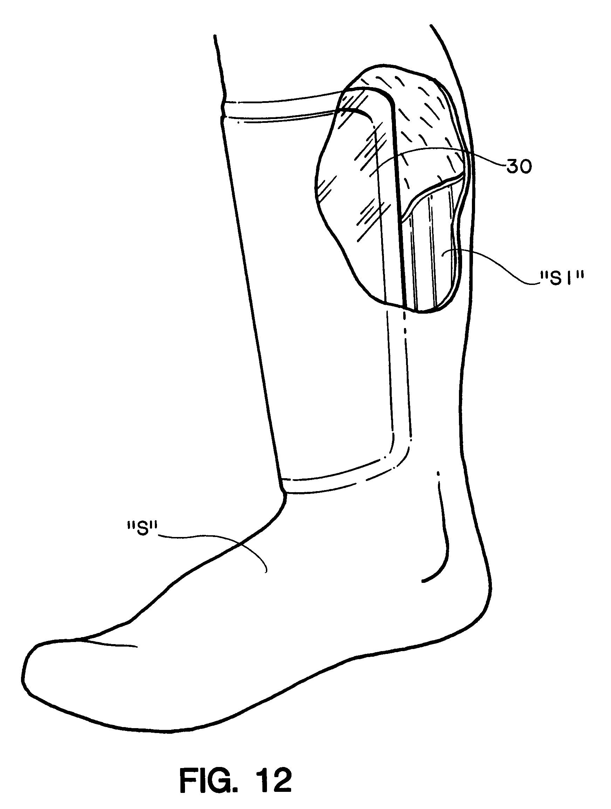

Alternatively, the pad 30 can be worn over an undersock "S1" and under the game sock "S", as is shown in Figure 12. Ordinarily, pad 30 will fit acceptably over the undersock "S1" even if molded directly over the skin. However, the pad 30 can be molded onto the shin while the wearer is wearing an undersock, if the pad 30 is to be normally worn over an undersock.

It can be seen from the above description that the embodiments which have been described provide a body protective pad which can be molded to a body part to be protected. The body protective pad hardens in the presence of moisture to form a very rigid but very light-weight protective pad. The body protective pad can easily be cut to the desired shape needed for the pad. The body protective pad can be worn without the need for the pad to be held into place by straps or belts. The body protective pad is preferably stored in a moisture-proof pouch until ready for application to the body part to be protected. The body protective pad is preferably cut from a long roll of pad material stored in a moisture-proof elongate pouch which can be rolled into a coil. The body protective pad is suitable for protecting against injury, and protecting injuries against further damage. The body protective pad can be cut to the desired size and shape.

A protective pad for being molded onto a body part to be protected is described above. Various details of the invention may be changed without departing from its scope. Furthermore, the foregoing description of the preferred embodiment of the invention and the best mode for practicing the invention are provided for the purpose of illustration only and not for the purpose of limitation - the invention being defined by the claims.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. A multi-layer protective pad for being custom-fitted to a body member to be protected, comprising:
   (a) a flexible inner cushion layer for being placed closest to the body member;
   (b) an initially flexible intermediate layer bonded to the inner layer, said intermediate layer comprised of at least one thickness of a fabric impregnated with a moisture-curable resin which hardens upon curing to form a rigid structure of the fabric which retains a body part-defined shape into which it is molded during curing, thereby also holding the flexible inner cushion layer in the same body-part defined shape; and
   (c) a flexible outer layer bonded to the intermediate layer for being held by the intermediate layer in the same body-part defined shape as the intermediate shape.

2. A body part protective pad according to claim 1, wherein said at least one thickness of fabric comprises a plurality of overlaid thicknesses of fiberglass.

3. A body part protective pad according to claim 2, wherein said plurality of thicknesses of fiberglass comprises at least five thicknesses and no more than seven thicknesses.

4. A body part protective pad according to claim 2 or 3, wherein said fiberglass thicknesses are sewn together with stitches in order to provide stability to the protective pad during molding.

5. A body protective pad according to claim 4, wherein said stitches extend substantially down the centerline of the intermediate layer.

6. A body protective pad according to any of claims 1 to 5, wherein. said inner layer has a waffle-like surface of regularly-spaced depress ions separated by raised boundary areas.

7. A body protective pad according to any preceding claim, wherein said outer layer-comprises ethylene vinyl acetate.

8. A body protective pad according to claim 7, wherein said outer layer has a waffle-like surface of regularly-spaced depressions separated by raised boundary areas.

9. A body protective pad according to any preceding claim, wherein said outer layer comprises a thin sheet of film chosen from the group consisting of polyester and polycarbonate.

10. A body protective pad according to claim 9 , wherein said film is perforated to provide air transfer through the pad.

11. A body protective pad according to any preceding claim, wherein said moisture-curable resin comprises polyisocyanate.

12. A multi-layer protective pad assembly for preparing a protective pad custom-fitted to a body part to be protected, and comprising:
    (a) a flexible inner cushion layer for being placed closest to the body member;
    (b) an initially flexible intermediate layer bonded to the Inner layer, said intermediate layer comprised

6

of at least one thickness of a fabric impregnated with a moisture-curable resin which hardens upon curing to form a rigid structure of the fabric which retains a body part-defined shape into which it is molded during curing, thereby also holding the flexible inner cushion layer in the same body-part defined shape;

(c) a flexible outer layer bonded to the intermediate layer for being held by the intermediate layer in the same body-part defined shape as the intermediate shape; and

(d) a moisture-proof protective pouch within which elements (a), (b) and (c) are sealed in the absence of moisture until the time the pad is to be molded to the body part to be protected.

13. A body part protective pad according to claim 12, wherein said at least one thickness of fabric comprises a plurality of overlaid thicknesses of fiberglass.

14. A body part protective pad according to claim 13, wherein said plurality of thicknesses of fiberglass comprises at least five thicknesses and no more than seven thicknesses.

15. A body part protective pad according to claim 13 or 14, wherein said fiberglass thicknesses are sewn together with stitches in order to provide stability to the protective pad during molding.

16. A body protective pad assembly according to claim 15, wherein said stitches extend substantially down the centerline of the intermediate layer.

17. A body protective pad assembly according to any of claims 12 to 16, wherein said inner layer has a waffle-like surface of regularly-spaced depressions separated by raised boundary areas.

18. A body protective pad assembly according to any of claims 12 to 17, wherein said outer layer comprises ethylene vinyl acetate.

19. A body protective pad assembly according to claim 18, wherein said outer layer has a waffle-like surface of regularly-spaced depressions separated by raised boundary areas.

20. A body protective pad assembly according to any of claims 12 to 18, wherein said outer layer comprises a thin sheet of film chosen from the group consisting of polyester and polycarbonate.

21. A body protective pad assembly according to claim 20, wherein said film is perforated to provide air transfer through the pad.

22. A body protective pad assembly according to any of claims 12 to 21, wherein said moisture-curable resin comprises polyiscyanate.

23. A body protective pad assembly according to any of claims 12 to 22, wherein said moisture-proof protective pouch comprises a pouch sized and shaped to enclose a single body part protective pad.

24. A body protective pad assembly according to any of claims 12 to 23, wherein said moisture proof protective pouch comprises an elongated pouch of sufficient length to hold an elongate pad member which can be cut into desired lengths to define a plurality of body protective pads, and including sealing means for resealing the pouch after a pad has been cut from the elongate pad member.

25. A body protective pad according to any preceding claim, wherein said pad comprises a shin guard.

26. A body protective pad according to any preceding claim, wherein said pad comprises a thigh pad.

27. A body protective pad according to any preceding claim, wherein said pad comprises a elbow pad.

28. A body protective pad according to any preceding claim, wherein said pad comprises a forearm pad.

29. A body protective pad according to any preceding claim, wherein said pad comprises a upper arm pad.

30. A body part protective pad according to any preceding claim, and including a second pad for being positioned and secured to the inner surface of the inner layer of said pad in surrounding relation to an injury for providing additional protection to the injury.

31. Any novel subject matter or combination including novel subject matter disclosed, whether or not within the scope of or relating to the same invention as any of the preceding claims.

FIG. 1

FIG. 2

FIG. 3

FIG. 4

EP 0 564 246 A1

FIG. 5

FIG. 6

30

60

**FIG. 7**

FIG. 8

30

30

FIG. 9

FIG. 10

"S"

30

FIG. 11

FIG. 12

EP 0 564 246 A1

| | European Patent Office | EUROPEAN SEARCH REPORT | Application Number |
| | | | EP 93 30 2487 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 899 738 (A. BRUCE PARKER)<br><br>* the whole document * | 1-3,7,9,<br>11-14,<br>18,20,22 | A41D13/00<br>B32B27/12<br>A63B71/08 |
| D,X | US-A-4 770 299 (A. BRUCE PARKER)<br><br>* the whole document * | 1-3,7,9,<br>11-14,<br>18,20,22 | |
| D,A | US-A-4 411 262 (W. VON BONIN ET AL)<br>* column 2, line 3 - line 47; claims 1,3,10 * | 1 | |
| A | EP-A-0 061 642 (BAYER AG)<br>* page 6, line 16 - page 8, line 27 *<br>* page 20, line 18 - page 21, line 34; claims 1-7; figures 1-4 * | 1 | |
| A | EP-A-0 286 426 (SMITH AND NEPHEW CASTINGS INC.) | | |

TECHNICAL FIELDS SEARCHED (Int. Cl.5 )

A41D
B32B
A63B
A61F

The present search report has been drawn up for all claims

| Place of search | Date of completion of the search | Examiner |
| THE HAGUE | 16 1993 | FAIRBANKS S.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

21